Europäisches Patentamt

European Patent Office

Office européen des brevets

(11) Numéro de publication : **0 456 531 A1**

# (12) DEMANDE DE BREVET EUROPEEN

(21) Numéro de dépôt : **91400861.0**

(51) Int. Cl.⁵ : **B62D 25/14**

(22) Date de dépôt : **29.03.91**

(30) Priorité : 11.05.90 FR 9005891

(43) Date de publication de la demande :
**13.11.91 Bulletin 91/46**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Demaldent, Jean-Michel**
**27, rue de l'Eglise**
**F-78500 Sartrouville (FR)**
Inventeur : **Rossi, Claude**
**55, avenue Jean Moulin**
**F-91390 Morsang sur Orge (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) Structure plastique de séparation entre l'habitacle et le compartiment moteur d'un véhicule automobile.

(57)    Structure plastique de séparation entre l'habitacle et le compartiment moteur d'un véhicule automobile dans laquelle une cloison (21) dont la largeur et la hauteur sont sensiblement en correspondance avec la largeur de l'habitacle et la hauteur disponible au-dessus du plancher jusqu'à la base du pare-brise, porte notamment un équipement (32) de chauffage, de désembuage et d'aération et une planche de bord (24).
   Caractérisé par le fait que la structure est montée entre une traverse (41) et une traverse arrière (42) respectivement solidarisées avec les faces avant et arrière de la cloison (21) et avec les côtés latéraux du compartiment moteur et de l'habitacle et possède des moyens (47, 50) de positionnement de mécanismes.

EP 0 456 531 A1

FIG.3

L'invention concerne une structure plastique de séparation entre, l'habitacle et le compartiment moteur d'un véhicule automobile dans laquelle une cloison dont la largeur et la hauteur sont sensiblement en correspondance avec la largeur de l'habitacle et la hauteur disponible au-dessus du plancher jusqu'à la base du pare-brise, porte notamment une installation de chauffage de désembuage et d'aération et une planche de bord.

La publication DE-A 3 119 572 décrit une structure encastrée entre les pieds avant d'une carrosserie de véhicule automobile.

La cloison de séparation entre l'habitacle et le compartiment moteur doit, non seulement porter la planche de bord et divers composants de l'installation de chauffage, mais encore supporter des mécanismes, la colonne de direction et l'ensemble du pédalier avec ses émetteurs de pression.

Par ailleurs, la cloison de séparation doit isoler du point de vue acoustique et thermique l'habitacle du véhicule et résister aux contraintes transversales communiquées par les éléments de structure du véhicule et aux contraintes thermiques communiquées par le groupe moto-propulseur du véhicule.

La publication BP-A 2 139 749 décrit une planche de bord qui incorpore les conduits distributeurs de l'air de désembuage et de ventilation. Les conduits sont formés dans une même pièce dont les parois reçoivent des couvercles ou des panneaux de fermeture séparables. Ces pièces additionnelles augmentent les risques de fuite d'air et de crissements dans les zones d'assemblage et d'encastrement.

L'invention a pour objet de permettre la réalisation d'une structure composite dans laquelle la cloison est associée à des éléments de structure rigides supportant l'ensemble préassemblé de la cloison avec la planche de bord et les mécanismes, dans le but de faciliter le montage de l'ensemble de la structure sur la carrosserie d'un véhicule automobile.

L'invention a aussi pour objet une structure dans laquelle des éléments de montage transversaux absorbent l'ensemble des contraintes mécaniques qui s'exercent sur la structure, dans le but d'autoriser l'emploi d'une cloison en matériau plastique obtenue par compression, par exemple d'une matière thermoplastique renforcé estampable à base de polypropylène sur laquelle on surmoule un insonorisant composite constitué d'une masse lourde et d'une mousse polyuréthane.

Selon l'invention, la structure est montée entre une traverse avant et une traverse arrière respectivement solidarisées avec les faces avant et arrière de la cloison et avec les côtés latéraux du compartiment moteur et de l'habitacle et possède des cavités de positionnement de mécanismes.

La structure ainsi réalisée se présente sous la forme d'un module de montage préassemblé susceptible d'être positionné sur la carrosserie avant son immobilisation.

L'assemblage ainsi réalisé contribue aussi à la rigidité de la structure avant de la carrosserie en reconstituant les liaisons mécaniques et l'étanchéité d'une structure conventionnelle à éléments soudés.

En particulier, l'assemblage proposé assure la liaison transversale des chapelles d'ancrage des têtes d'amortisseurs de la suspension de l'essieu moteur. La liaison améliorée desdites chapelles et des pieds avant ainsi obtenue absorbe les couples de rotation exercés sur ces mêmes chapelles au cours du roulement et des changements de trajectoire du véhicule et absorbe les vibrations issues du train avant.

D'autres caractéristiques et avantages de l'invention ressortiront de la description d'un exemple de réalisation de l'assemblage, faite en référence au dessin annexé dans lequel :

– La figure 1 est une vue en perspective séparée de la structure de la carrosserie et de l'habitacle,

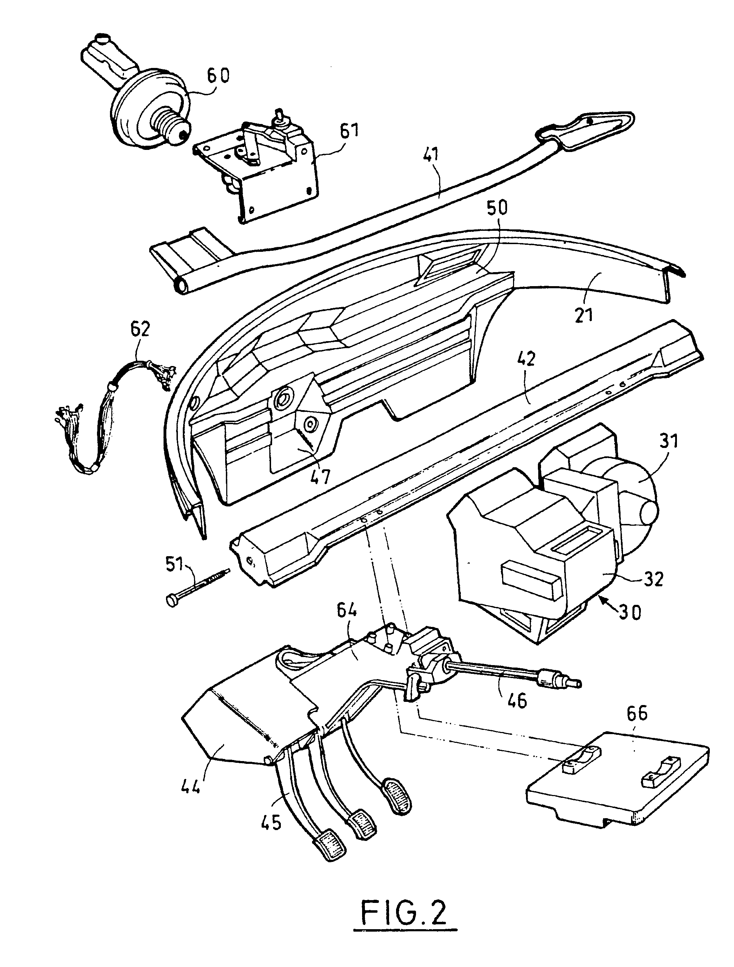

– La figure 2 est une vue éclatée de la structure,

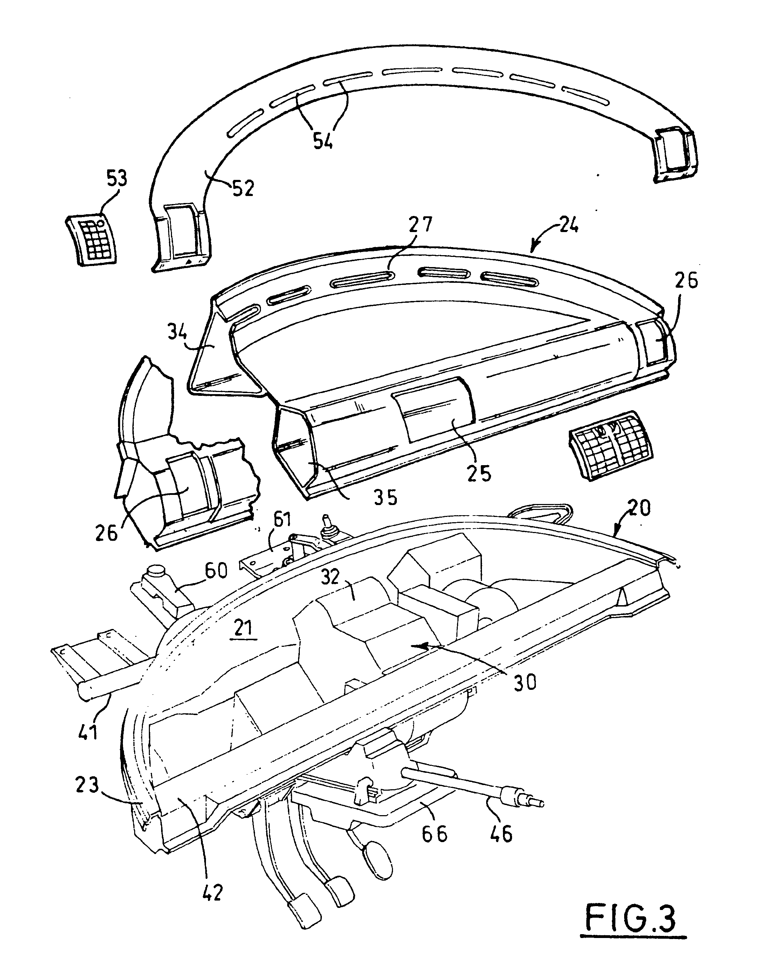

– La figure 3 est une vue assemblée de la structure montrant, de manière éclatée, les différents constituants de la planche de bord du véhicule.

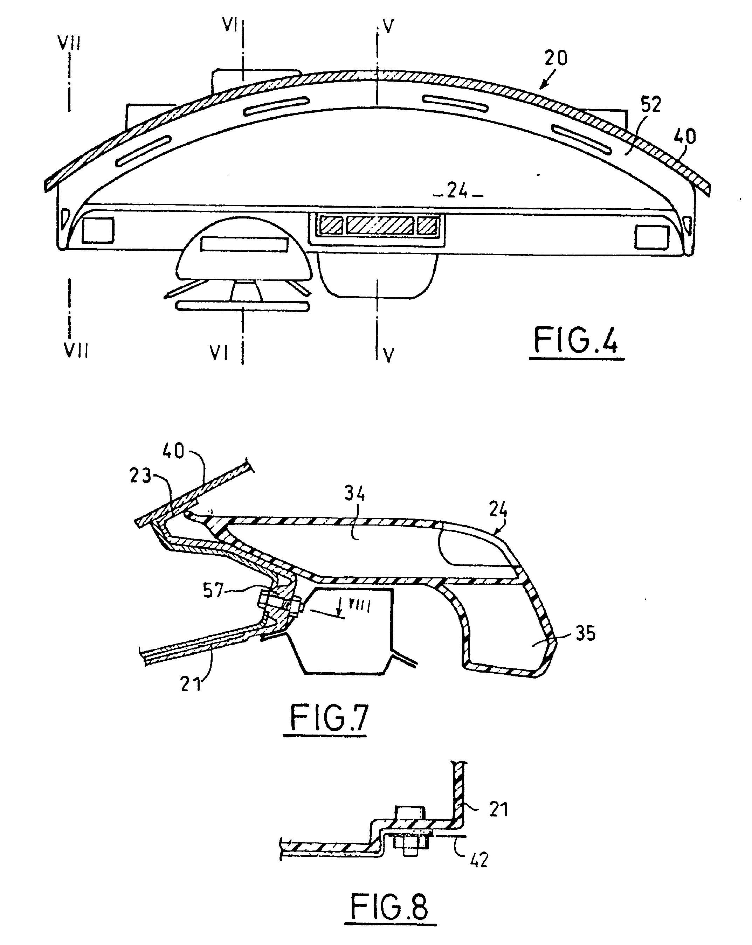

– La figure 4 et une vue en plan de la structure assemblée.

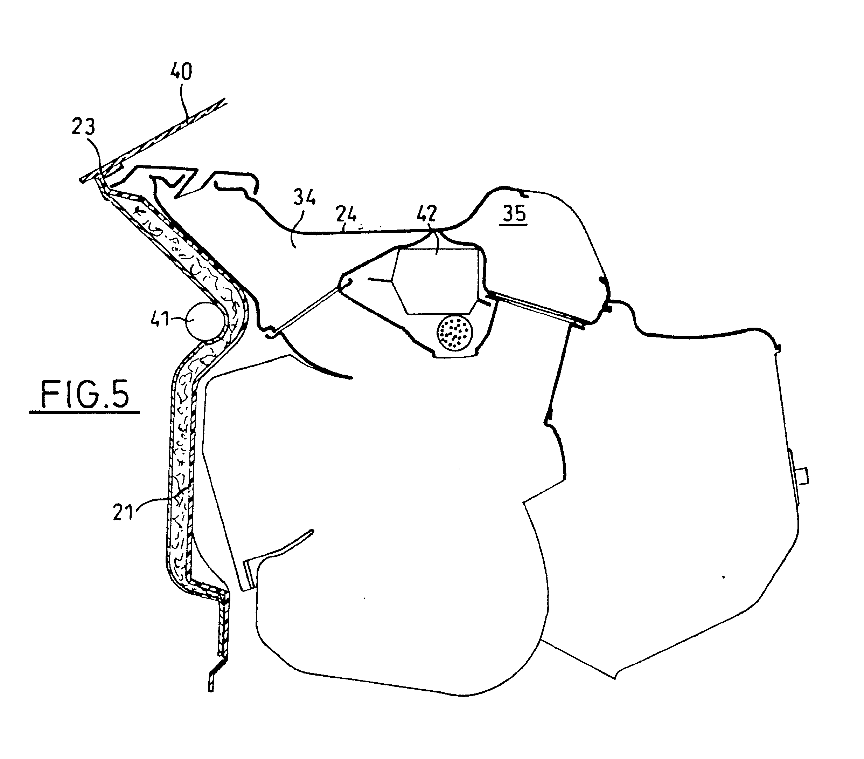

– La figure 5 est une section de la structure suivant la ligne V-V de la figure 4.

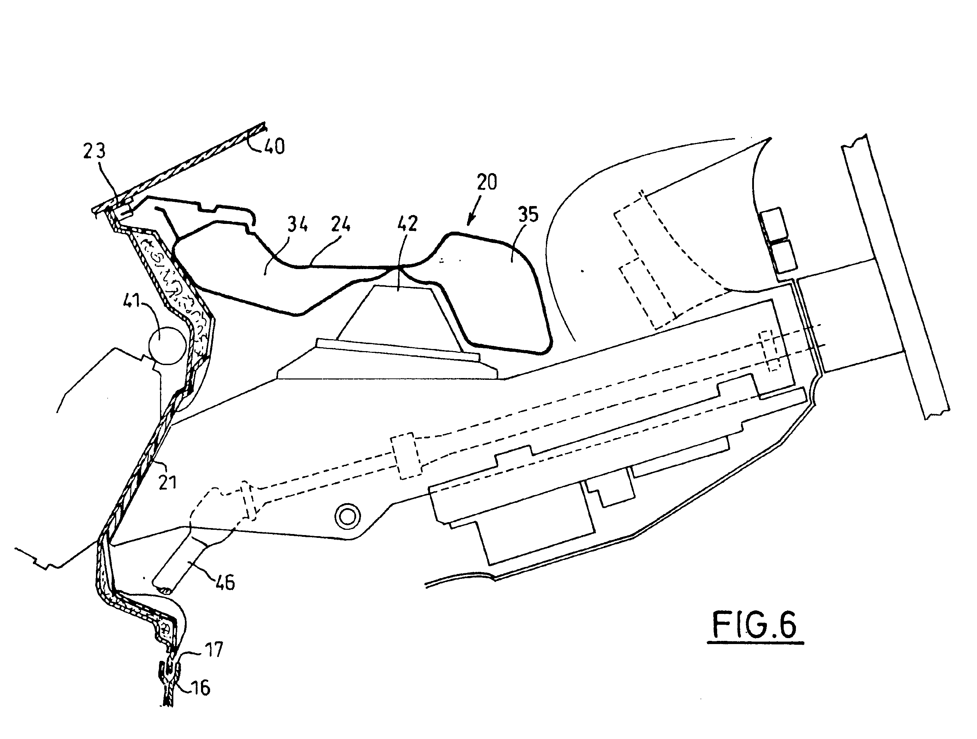

– La figure 6 est une section de la structure suivant la ligne VI - VI de la figure 4.

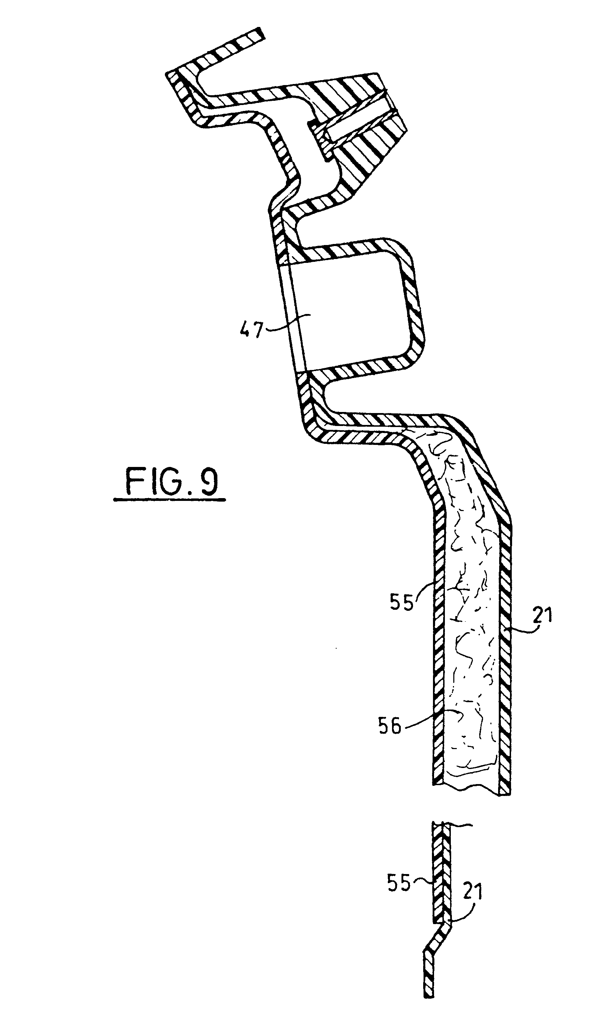

– La figure 7 est une section de la structure suivant la ligne VII - VIII de la figure 4.

– La figure 8 est une vue en coupe de la zone de fixation de la traverse arrière à la cloison.

– La figure 9 est une section de la cloison montrant une zone de fixation de la planche de bord et le logement destiné à la manutention de la structure préassemblée;

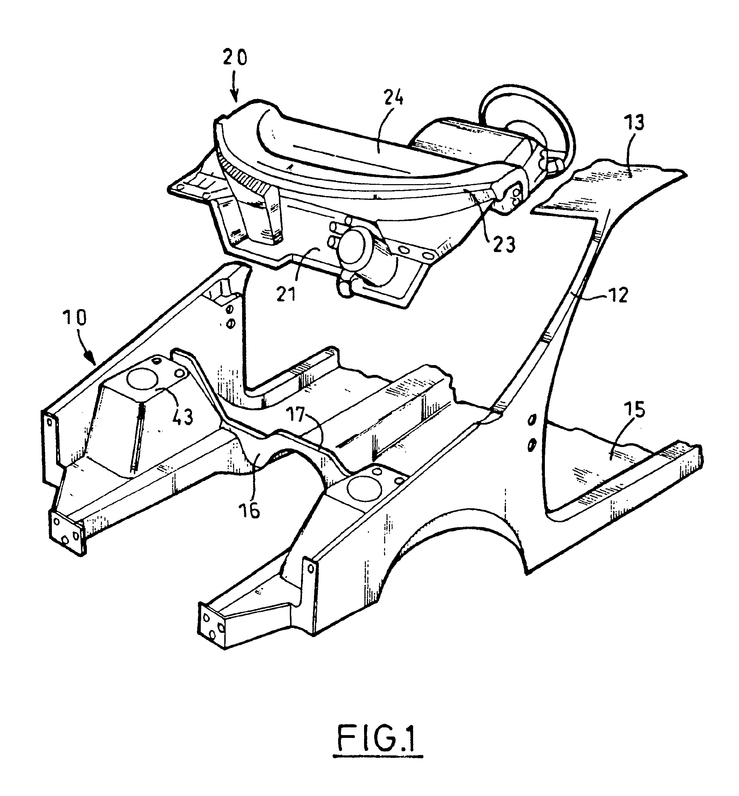

A la figure 1, une carrosserie 10 de véhicule automobile montre une baie de pare-brise qui s'étend entre les montants 12 du pavillon 13. Un plancher 15 se prolonge vers l'avant en 16 portant un bord d'accostage 17 et d'étanchéité de la structure 20 du poste de conduite composée d'une cloison 21 d'épaisseur variable résistant aux efforts appliqués dont la partie supérieure sous la forme d'une portée curviligne 23 porte une planche de bord 24 munie d'orifices 25, 26, 27 de sortie d'air de chauffage, de ventilation et de désembuage dans l'habitacle du véhicule raccordés à des moyens 30 de distribution et de répartition d'air incluant un groupe moto ventilateur 31, un bloc de chauffage et d'aération 32 qui répartit l'air de chauffage et de désembuage et de refroidissement dans deux canaux transversaux 34, 35. La planche de bord 24 qui intègre de la sorte les conduits de dégivrage, désembuage, chauffage et ventilation est réalisée par un procédé d'extrusion soufflage.

On réalise de la sorte une planche de bord avec deux caissons qui lui confèrent la raideur souhaitée et une traverse creuse face aux occupants du véhicule qui autorise une absorption des chocs consécutifs aux impacts des passagers du véhicule lors d'une collision.

La cloison 21 possède une largeur sensiblement en correspondance avec la largeur de l'habitacle définie par les bords d'accostage latéraux 17. La hauteur de la cloison 21 est en correspondance avec le bord d'accostage 17 de la partie avancée 16 du plancher 15 et s'étend jusqu'à la base du pare-brise 40 qui peut être collé directement sur le bord avant recourbé de la partie supérieure de la cloison 21.

La cloison 21 fait ainsi partie du poste de conduite réalisé sous la forme d'un module préassemblé susceptible d'être directement fixé à la carrosserie 10. A cet effet la structure 20 du poste de conduite est montée entre une traverse avant 41 et une traverse arrière 42.

La traverse avant 41 est supportée horizontalement par les chapelles d'ancrage des têtes d'amortisseurs de la suspension de l'essieu moteur et est reliée au moyen de vis à la face avant de la cloison 21 et est liée par une fixation semi-rigide avec les chapelles 43. La taverse arrière 42, solidarisée avec la face arrière de la cloison 21 est réalisée à partir de deux pièces en tôle assemblées par soudure ou sous la forme d'une pièce plastique extrudée. La face supérieure de la traverse 42 supporte la planche de bord 24. A la face inférieure de la traverse 42 sont accrochés par l'intermédiaire d'un gousset 64 le support 44 du pédalier 45 et de la colonne 46 de direction réalisés en matériau plastique avec ses paliers intégrés, le bloc de chauffage et d'aération 32, avec son évaporateur éventuel, le groupe moto ventilateur 31 et le module électrique 66 de commande. La face arrière de la cloison 21 porte avantageusement de logements 47 et des surfaces de guidage des moyens 30 de distribution et de répartition d'air nécessaires à leur immobilisation transversale et/ou à leur positionnement. Ces surfaces sont par exemple constituées par des glissières 50.

La structure 20, l'ensemble des moyens 30, les traverses 41, 42 et le support 44 du pédalier et de la colonne de direction peut être de la sorte prépositionné par rapport aux chapelles 43 et immobilisé latéralement au travers des pieds avant par de boulons 51.

L'étanchéité de la cloison 21 est réalisée par collage de celle-ci le long des bords d'accostage 17 du plancher 15 et par le collage du pare-brise.

La structure 20 est complétée par un élément enjoliveur de la planche de bord 52 qui porte les grilles 53 de sortie de l'air de chauffage et les ouvertures 54 de sortie de l'ouïe de désembuage à la base du pare-brise. Il permet également d'améliorer la qualité de finition de la planche de bord au niveau de l'accostage du pare-brise et est réalisé dans son matériau thermiquement stable.

Selon un autre aspect de l'invention la face de la cloison 21, tournée vers le compartiment moteur porte le servo-frein 60, le mécanisme essuie-vitre 61 et les faisceaux de câblage 62.

Cette même face porte un revêtement insonorisant 55 de masse élevée adhérisé à une mousse 56, par exemple en polyuréthane, injectée entre la cloison et le revêtement.

Selon l'exemple d'application le revêtement 55 est lui-même recouvert d'un film métallique destiné à réfléchir le rayonnement thermique et à réaliser une paroi conductrice des charges statiques emmagasinées par la structure.

La cloison 21 présente par ailleurs sur sa face avant des parties fonctionnelles constituées par les logements 47 permettant la manutention du module en cours de montage sur la carrosserie et des bossages 57 destinés à la fixation de la planche de bord 24.

**Revendications**

1°) Structure plastique de séparation entre l'habitacle et le compartiment moteur d'un véhicule automobile dans laquelle une cloison (21) dont la largeur et la hauteur sont sensiblement en correspondance avec la largeur de l'habitacle et la hauteur disponible au-dessus du plancher jusqu'à la base du pare-brise, porte notamment un équipement (32) de chauffage, de désembuage et d'aération et une planche de bord (24).
Caractérisé par le fait que la structure est montée entre une traverse (41) et une traverse arrière (42) respectivement solidarisée avec les faces avant et arrière de la cloison (21) et avec les côtés latéraux du compartiment moteur et de l'habitacle et possède des moyens (47, 50) de positionnement de mécanismes.

2°) Structure selon la revendication 1, caractérisée par le fait que la traverse arrière (42) possède une face support de la planche de bord (24) et de l'équipement de chauffage (30) et une face d'accrochage du support 44 du pédalier (45) et de la colonne de direction (46).

3°) Structure selon la revendication 1, caractérisée par le fait que la traverse avant (41) est supportée horizontalement et porte des fixations latérales semi-rigides.

4°) Structure selon la revendication 1, caractérisée par le fait que la cloison (21) possède entre autres une bordure inférieure et latérale d'encastrement et de collage dans une partie (16) du plancher (15) et une bordure supérieure de collage du pare-brise.

5°) Structure selon une quelconque des revendications 1 à 4, caractérisée pas le fait que la cloison porte un revêtement insonorisant de masse élevée adhérisé à la cloison par l'intermédiaire d'une couche de mousse injectée entre la cloison et le revêtement.

6°) Structure selon la revendication 5, caractérisé par le fait que le revêtement insonorisant est recouvert par un film métallique.

FIG.1

FIG.2

FIG.3

EP 0 456 531 A1

FIG.4

FIG.7

FIG.8

9

FIG.5

FIG.6

FIG.9

Office européen
des brevets

## RAPPORT DE RECHERCHE EUROPEENNE

Numero de la demande

EP  91 40 0861

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0338923 (PEUGEOT)<br>* figures 1-4 *<br>--- | 1 | B62D25/14 |
| A | EP-A-0141959 (FIAT)<br>* figures 1-5 *<br>--- | 1 | |
| A | FR-A-2541958 (HONDA GIKEN)<br>--- | | |
| D,A | DE-A-3119572 (FIAT)<br>----- | | |

**DOCUMENTS CONSIDERES COMME PERTINENTS**

**DOMAINES TECHNIQUES RECHERCHES (Int. Cl.5)**

B62D

Le présent rapport a été établi pour toutes les revendications

| Lieu de la recherche | Date d'achèvement de la recherche | Examinateur |
|---|---|---|
| BERLIN | 02 AOUT 1991 | LUDWIG H.J. |

EPO FORM 1503 03.82 (P0402)